# EUROPEAN PATENT SPECIFICATION

(11) **EP 4 256 772 B1**
(45) Date of publication and mention of the grant of the patent: **01.07.2026**
(21) Application number: 21904046.6
(22) Date of filing: 21.09.2021
(51) Int. Cl.: H04L 12/46

(54) **AN ARCHITECTURE FOR SMART SWITCH CENTERED NEXT GENERATION CLOUD INFRASTRUCTURE**
ARCHITEKTUR FÜR INTELLIGENTE SCHALTERZENTRIERTE CLOUD-INFRASTRUKTUR DER NÄCHSTEN GENERATION
ARCHITECTURE POUR INFRASTRUCTURE EN NUAGE DE PROCHAINE GÉNÉRATION CENTRÉE SUR LES COMMUTATEURS INTELLIGENTS

(30) Priority: 07.12.2020 US 202017114304
(43) Date of publication of application: 11.10.2023
(73) Proprietor: INTEL Corporation, Santa Clara, CA 95054 (US)
(72) Inventor: HE, Shaopeng, Shanghai, 200241 (CN); WU, Jingjing, Shanghai, 200123 (CN); KANG, Haitao, Shanghai, 200240 (CN); LI, Yadong, Portland, Oregon 97229 (US); TIAN, Kun, Shanghai, 200241 (CN)
(74) Representative: Samson & Partner Patentanwälte mbB
(86) International application number: PCT/US2021/051368
(87) International publication number: WO 2022/125164

(56) References cited:
- US-A1- 2015 281 128
- US-A1- 2018 024 739
- US-A1- 2018 063 018

## Description

### CLAIM OF PRIORITY

The present application claims the benefit of a priority of U.S. Patent Application No. 17/114,304, filed December 7, 2020, entitled, "ARCHITECTURE FOR SMART SWITCH CENTERED NEXT GENERATION CLOUD INFRASTRUCTURE".

### BACKGROUND INFORMATION

Cloud-hosted services including Web services, Software as a Service (SaaS), Platform as a Service (PaaS), and Infrastructure as a Service (IaaS). Cloud Service Providers (CSP) have implemented growing levels of virtualization in these services. For example, deployment of Software Defined Networking (SDN) and Network Function Virtualization (NFV) has also seen rapid growth in the past few years. Under SDN, the system that makes decisions about where traffic is sent (the control plane) is decoupled for the underlying system that forwards traffic to the selected destination (the data plane). SDN concepts may be employed to facilitate network virtualization, enabling service providers to manage various aspects of their network services via software applications and APIs (Application Program Interfaces). Under NFV, by virtualizing network functions as software applications (including virtual network functions (VNFs), network service providers can gain flexibility in network configuration, enabling significant benefits including optimization of available bandwidth, cost savings, and faster time to market for new services.

In the IaaS cloud industry, virtualization is playing a fundamental role, as can bee seen in US 2015/281128 A1. Virtual machine is popular as its elasticity. Meanwhile, physical machines are also indispensable for their high-performance and comprehensive features. Under virtualization in cloud environments, very large numbers of traffic flows may exist, which poses challenges. Supporting packet processing and forwarding for such large number of flows can be very CPU (central processing unit) intensive. One solution is to use so-called "Smart" NICs (Network Interface Controllers) in the compute servers to offload routing and forwarding aspects of packet processing to hardware in the NICs. Another approach uses accelerator cards in the compute servers. However, these approaches do not address aspects of forwarding data and storage traffic between pairs of compute servers and between compute servers and storage servers that are implemented in switches in cloud infrastructures.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic diagram illustrating an embodiment of a smart switch centered next generation cloud infrastructure;
Figure 1a is a schematic diagram illustrating an augmented version of the smart switch centered next generation cloud infrastructure of Figure 1 to support multiple tenants;
Figure 1b is a schematic diagram illustrating an augmented version of the smart switch centered next generation cloud infrastructure of Figure 1a to support multiple tenants adding further hardware and software components in an aggregation switch;
Figure 2 is a schematic diagram of a compute server, according to one embodiment;
Figure 3 is a schematic diagram illustrating aspects of the smart switch centered next generation cloud infrastructure of Figure 1 including a compute server and a Top of Rack (ToR) switch implemented as a smart server switch;
Figure 4 is a diagram illustrating aspects of a P4 programming model and deployment under which control plane operations are implemented in a server that is separate from the ToR switch;
Figure 4a is a diagram illustrating aspects of a P4 programming model and deployment under which control plane operations are implemented via software running in the user space of the ToR switch;
Figure 5 is a schematic diagram of a smart switch centered next generation cloud infrastructure architecture supporting end-to-end hardware forwarding for storage traffic, according to one embodiment;
Figure 6 is a schematic diagram illustrating a network and NFV reference design, according to one embodiment; and
Figure 7 is a schematic diagram illustrating a storage reference design, according to one embodiment.

### DETAILED DESCRIPTION

The present invention is defined in independent method claim 1, in independent apparatus claim 8, and in independent computer product claim 12. Embodiments of methods and apparatus for smart switch centered next generation cloud infrastructure architectures are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

In accordance with aspects of the embodiments disclosed herein, smart server switches are provided that support hardware-based forwarding of data traffic and storage traffic in cloud environments employing virtualization in compute servers and storage servers. In one aspect, the hardware-based forwarding is implemented in the data plane using programmable switch chips that are used to execute data plane runtime code in hardware. In some embodiments, the switch chips are P4 (named for "Programming Protocol-independent Packet Processors") chips.

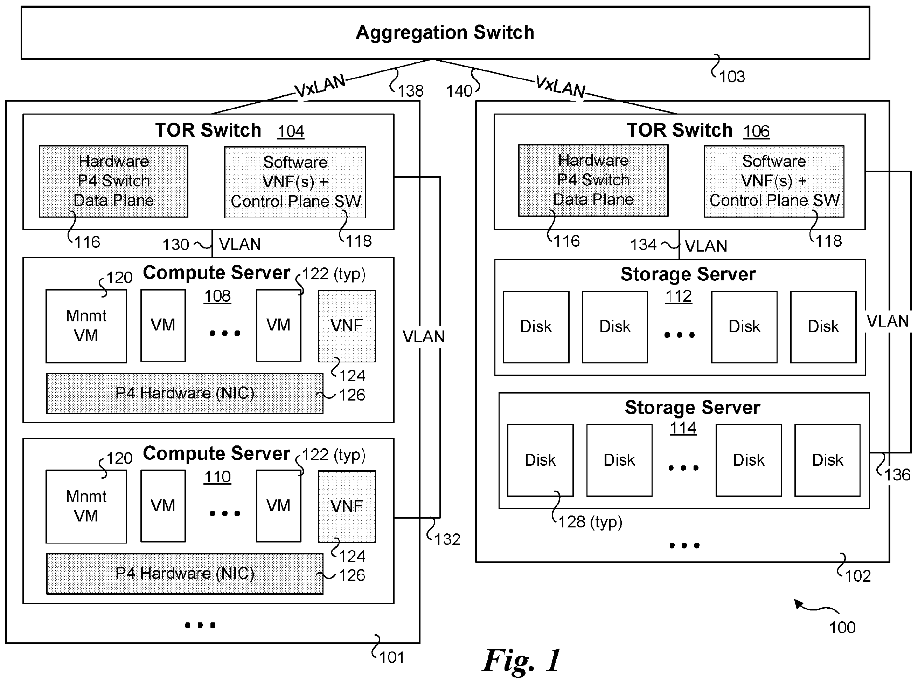

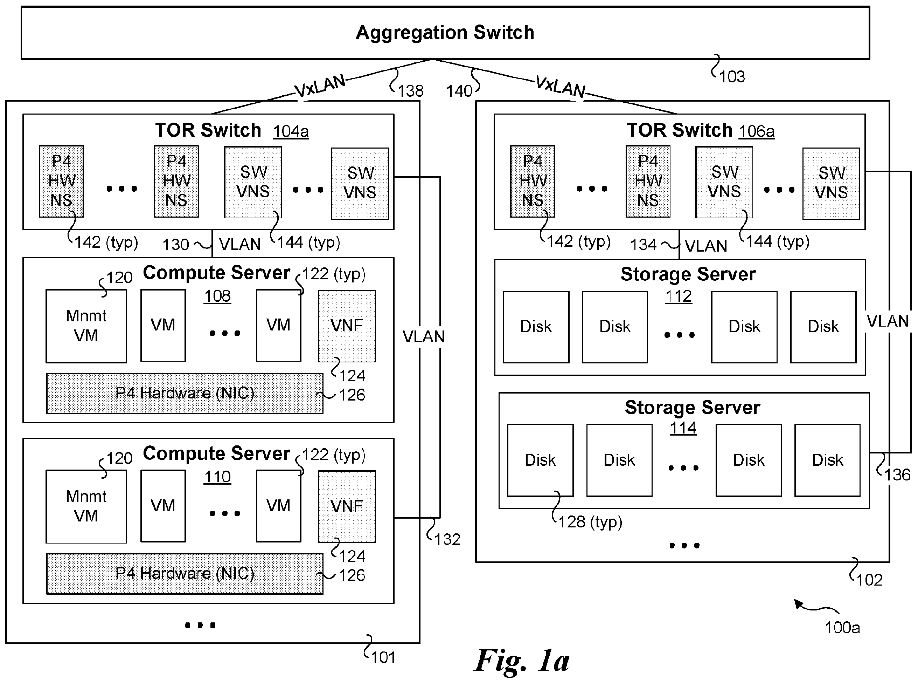

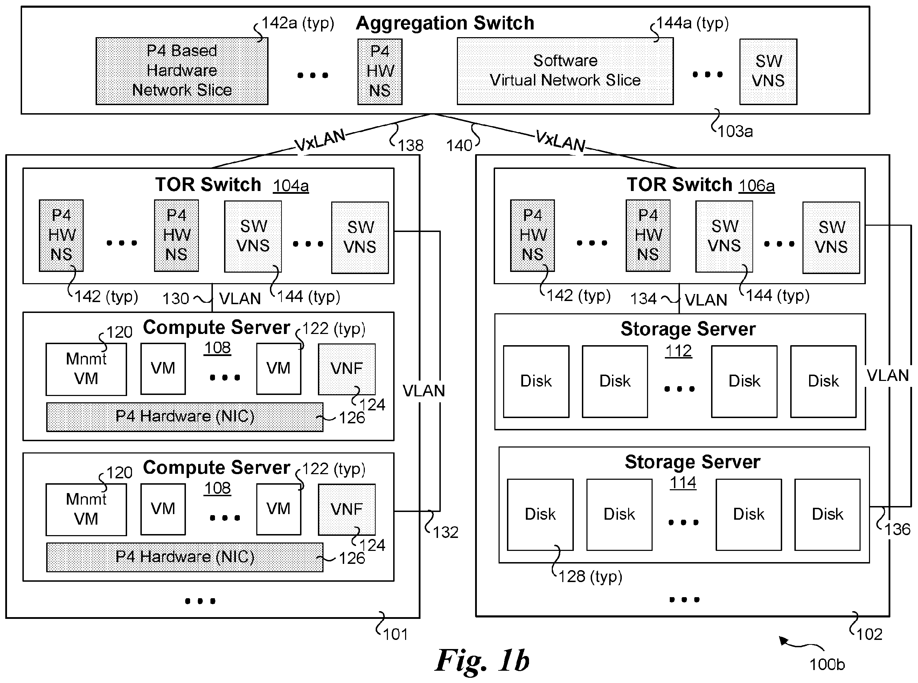

Figure 1 shows an embodiment of a smart switch centered next generation cloud infrastructure 100. For simplicity, an implementation using two racks or cabinets 101 and 102 are shown. In practice, similar architecture could be implemented on many racks. At a top level, infrastructure 100 includes an aggregation switch 102, Top of Rack (ToR) switches 104 and 106, compute servers 108 and 110, and storage servers 112 and 114. Each of ToR switches 104 and 106 include a hardware-based P4 switch 116 and one or more software-based virtual network functions (VNFs) + control plane software 118. As further shown, data plane operations are performed in hardware (via hardware-based P4 switch 116), while control plane operations are performed in software (e.g., via control plane software).

Each of compute servers 108 and 110 includes software components comprising a management VM 120, one or more VMs 122, and one or more VNFs 124 (only one of which is shown). Each compute server 108 and 110 also includes a NIC (network interface controller) 126 including a P4 NIC chips. Each of storage servers 112 and 114 includes a plurality of storage devices depicted as disks 128 for illustrative purposes. Generally, disks 128 are illustrative of a variety of types of non-volatile storage devices including solid-state disks and magnetic disks, as well as storage devices having other form factors such as NVDIMMs (Non-volatile Dual Inline Memory Modules).

ToR switch 104 is connected to compute server 108 via a virtual local area network (VLAN) link 130 and to compute server 110 via a VLAN link 132. ToR switch 106 is connected to storage server 112 via a VLAN link 134 and to storage server 114 via a VLAN link 136. In the illustrated embodiment, ToR switches 104 and 106 are respectfully connected to aggregation switch 103 via VxLAN (Virtual Extensible LAN) links 138 and 140. VxLAN is a network virtualization technology used to support scalability in large cloud computing deployments. VxLAN is a tunneling protocol that encapsulates Layer 2 Ethernet frames in Layer 4 User Datagram Protocol (UDP) datagrams (also referred as UDP packets), enabling operators to create virtualized Layer 2 subnets, or segments, that span physical Layer 3 networks.

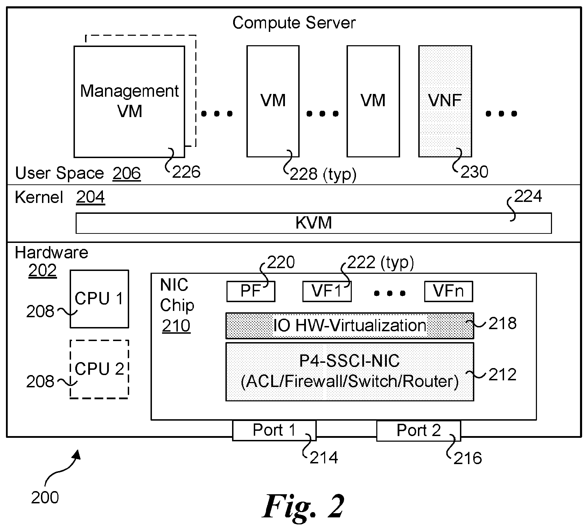

Figure 2 shows selective aspects of a compute server 200, according to one embodiment. Compute server 200 is depicted with hardware 200, an operating system kernel 204, and user space 206, the latter two of which would be implemented in memory on the compute server. Hardware 202 is depicted as including one of more CPUs 208 and a NIC chip 210. In one embodiment, a CPU 208 is a multi-core processor. NIC chip 210 includes a P4-SSCI (Smart Switch centered next generation Cloud Infrastructure)-NIC block 212, one or more ports (depicted as ports 214 and 216), an IO (Input-Output) hardware-virtualization layer 218, one or more physical functions (PF) 220, and one or more virtual functions 222, depicted as VF1 ... VFn.

In the illustrated embodiment, kernel 204 is a Linux kernel and includes a Linux KVM (Kernel-based Virtual Machine) 224. A Linux KVM is a full virtualization solution for Linux on x86 hardware containing virtualization extensions (Intel^{®} VT or AMD^{®}-V). It consists of a loadable kernel module, kvm.ko, that provides the core virtualization infrastructure and a processor specific module, kvm-intel.ko or kvm-amd.ko.

User space 206 in used to load and execute various software components and applications. These include one or more management VMs 226, a plurality of VMs 228, and one or more VNFs 230. User space 206 also includes additional KVM virtualization components that are implemented in user space rather than the Linux kernel, such as QEMU in some embodiments. QEMU is generic and open-source machine emulator and virtualizer.

P4-SSCI-NIC block 212 employs a hardware programming language (e.g., P4 language), P4Runtime, and associated libraries to enable NIC Chip 210 to be dynamically programmed to implement a packet processing pipeline. In one embodiment, NIC chip 210 includes circuitry to support P4 applications (e.g., applications written in the P4 language). Once programmed, P4-SSCI-NIC block 212 may support one or more of ACL (action control list) functions, firewall functions, switch functions, and/or router functions. Further details of programming with P4 and associated functionality are described below.

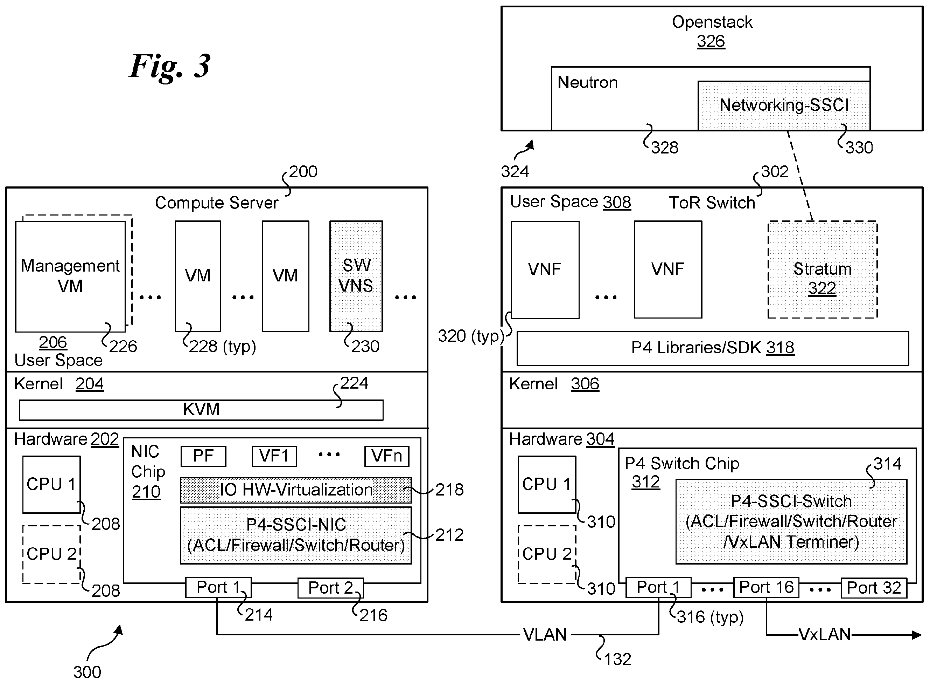

Figure 3 shows an architecture 300 include compute server 200 coupled to a ToR switch 302. As depicted by like-numbered reference numbers, the configuration of compute server 200 in Figures 2 and 3 are similar. Accordingly, the following description focuses on ToR switch 302 and components that interact with ToR switch 302.

In one embodiment, ToR switch is a "server switch," meaning it is a switch having an underlying architecture similar to a compute server that supports switching functionality. ToR switch 302 is logically partitioned as hardware 304, an OS kernel 306, and user space 308. Hardware 304 includes one or more CPUs 310 and a P4 switch chip 312. P4 switch chip 314 includes a P4-SSCI-Switch block 314, and multiple ports 316. In the illustrated example, there are 32 ports, but this is merely exemplary as other numbers of ports may be implemented, such as 24, 28, 36, *etc.*). P4-SSCI-Switch block 314 is programmed using P4 and may support one or more functions including ACL functions, firewall functions, switch functions, and router functions. P4-SSCI-Switch block 314 also operates as a VxLAN terminator to support VxLAN operations.

Application-level software are executed in user space 308. This includes P4 libraries/SDK 318, one or more VNFs 320, and a Statum 322. Stratum is an open source silicon-independent switch operating system for SDNs. Stratum exposes a set of next-generation SDN interfaces including P4Runtime and OpenConfig, enabling interchangeability of forwarding devices and programmability of forwarding behaviors. Stratum defines a contract defining forwarding behavior supported by the data plane, expressed in P4 language.

Architecture 300 further shows an external server 324 running Openstack 326. The OpenStack project is a global collaboration of developers and cloud computing technologists producing an open standard cloud computing platform for both public and private clouds. OpenStack is a free open standard cloud computing platform, mostly deployed as infrastructure-as-a-service (IaaS) in both public and private clouds. Server 324 is also running Neutron 328, which includes a networking-SSCI block 330. Neutron is an OpenStack project to provide "networking as a service" between interface devices (e.g., vNICs) managed by other Openstack services (e.g., nova). Networking-SSCI block 330 provides communication between Neutron 328 and Stratum 322.

P4 is a language for expressing how packets are processed by the data plane of a forwarding element such as a hardware or software switch, network interface card/controller (NIC), router, or network appliance. Many targets (in particular targets following an SDN architecture) implement a separate control plane and a data plane. P4 is designed to specify the data plane functionality of the target.

Separately, P4 programs can also be used along with P4Runtime to partially define the interface by which the control plane and the data-plane communicate. In this scenario, P4 is first used to describe the forwarding behavior and this in turn is converted by a P4 compiler into the metadata needed for the control plane and data plane to communicate. The data plane need not be programmable for P4 and P4Runtime to be of value in unambiguously defining the capabilities of the data plane and how the control plane can control these capabilities.

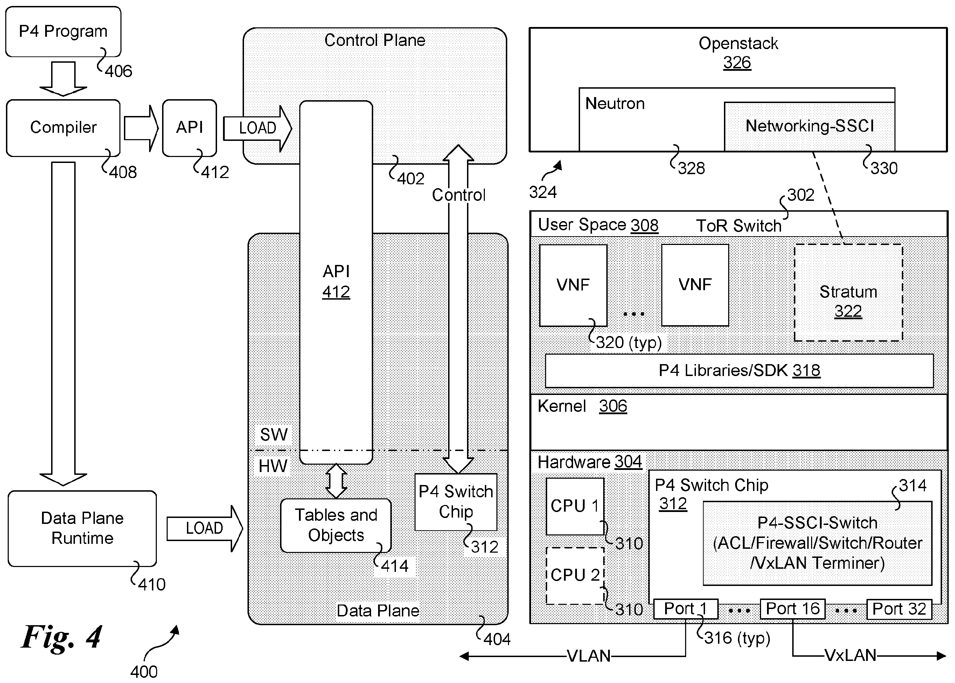

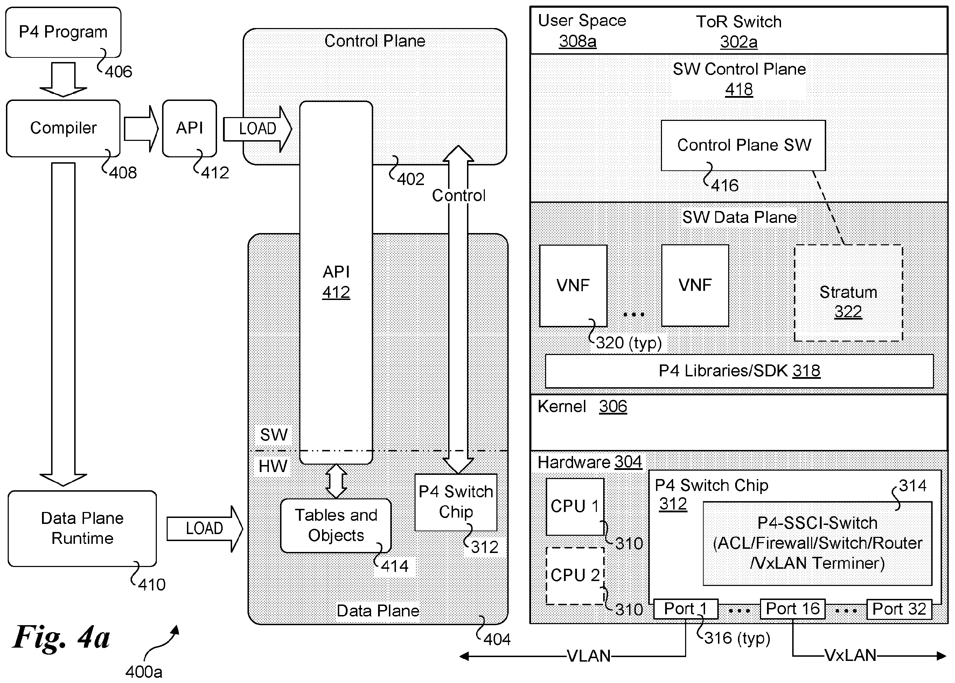

Figure 4 shows an architecture 400 the overlays aspects of a P4 program implementation using ToR switch 302 and server 324 of Figure 3. The implementation is logically divided into a control plane 402 and a data plane 404, which in turn is split into a software layer and a hardware layer. A P4 program is written and compiled by a compiler 408, which outputs data plane runtime code 410 and an API 412. The data plane runtime code 410 is loaded to P4 switch chip 312, which is part of the HW data plane. All or a portion of tables and objects 414 are also deployed in the HW data plane.

The control plane 402 aspects of the P4 deployment model enables software running on a server or the like to implement control plane operations using API 412. API 412 provides a means for communicating with and controlling data plane runtime code 410 running on P4 switch chip 312, wherein API 412 may leverage use of P4 Libraries/SKD 318.

Under the configuration illustrated in Figure 4, the control plane aspects are implemented in server 324, which is separate from ToR switch 302. Under an alternative architecture 400a shown in Figure 4a, both the control plane and data plane are implemented in a ToR switch 302a, wherein the control plane aspects are implemented via control plane software 416 that is executed in user space 308a and is associated with SW control plane 418. While Figure 4a shows control plane SW 416 interfacing with stratum 322, in other embodiments stratum 322 is not used. Generally, control plane SW 416 may use API 412 to communicate with and control data plane runtime code running in P4 Switch 312

Generally, the primary data plane workload of ToR switch 302 and ToR switch 302a is performed in hardware via P4 data plane runtime code executing on P4 switch chip 312. The use of one of more VNFs 320 is optional. Some functions that are commonly associated with data plane aspects may be implemented in one or more VNFs. For example, this may include an VNF (or NFV) to track a customers specific connections.

In some embodiments, P4 switch chip 312 comprises a P4 switch chip provided by Barefoot Networks^{®}. In some embodiments P4 switch chip 312 is a Barefoot Networks^{®} Tofino chip that implements a Protocol Independent Switch Architecture (PISA) and can be programmed using P4. In embodiments, employing Barefoot Networks^{®} switch chips, P4 libraries/SDK and compiler 408 are provided by Barefoot Networks^{®}.

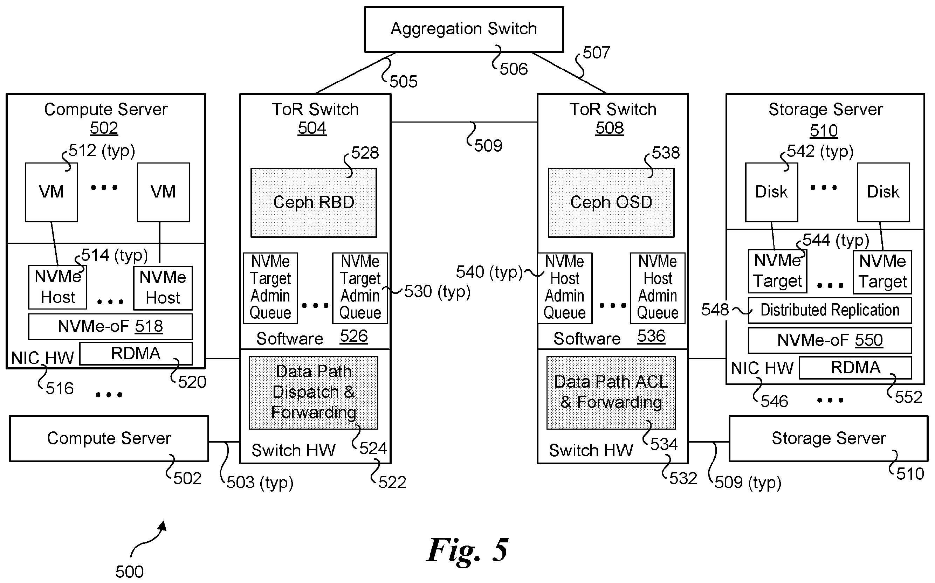

Figure 5 shows an architecture 500 providing compute servers with access to storage services provided by storage servers. Under the embodiment of architecture 500, the compute servers and storage servers are deployed in separate racks, while under a variant of architecture 500 (not shown) the compute servers and storage servers may reside in the same rack.

In further detail, architecture 500 depicts multiple compute servers 502 having similar configurations coupled to a ToR switch 504 via links 503. ToR switch 504 is connected to a ToR switch 508 via an aggregation switch 506 and links 505 and 507, and is connected to multiple storage servers 510 via links 511. Alternatively, ToR switch 504 is connected to ToR switch 508 via a direct link 509. Compute server 502 includes one or more VMs 512 that are connected to a respective NVMe (Non-Volatile Memory Express) host 514 implemented in NIC hardware 516. NIC hardware 516 further includes an NVMe-oF (Non-Volatile Memory Express over Fabric) block 518 and an RDMA (Remote Direct Memory Access) block 520 that is configured to employ RDMA verbs to support remote access to data stored on storage servers 510.

In some embodiments ToR switch 504 is a server switch having switch hardware 522 similar to hardware 304. Functionality implemented in switch hardware 522 includes data path and dispatch forwarding 524. Software 526 for ToR switch 504 includes Ceph RBD (Reliable Autonomic Distributed Object Store (RADOS) Block Device) module 528 and one or more NVMe target admin queues 530. Ceph is a distributed object, block, and file storage platform that is part of the open source Ceph project. Ceph's object storage system allows users to mount Ceph as a thin-provisioned block device. When an application writes data to Ceph using a block device, Ceph automatically stripes and replicates the data across the cluster. Ceph's RBD also integrates with Kernel-based Virtual Machines (KVMs).

In some embodiments ToR switch 508 is a server switch having switch hardware 532 similar to hardware 304. Functionality implemented in switch hardware 532 includes data path ACL and forwarding 534. Software 536 for ToR switch 508 includes Ceph Object Storage Daemon (OSD) 538 and one or more NVMe host admin queues 540. Ceph OSD 538 is the object storage daemon for the Ceph distributed file system. It is responsible for storing objects on a local file system and providing access to them over the network.

Storage server 510 includes a plurality of disks 512 that are connected to respective NVMe targets 544 implemented in NIC hardware 546. NIC hardware 546 further includes a distributed replication block 548, an NVMe-oF block 550 and an a RDMA block 552 that is configured to employ RDMA verbs to support host-side access to data stored in disks 542 in connection with RDMA block 520 on compute servers . Generally, disks 542 represents some form of storage device, which may have a physical disk form factor, such as an SSD (solid-state disk), magnetic disk, or optical disk, or may comprise another form of non-volatile storage, such as a storage class memory (SCM) device including NVDIMMs (Non-Volatile Dual Inline Memory Modules) as well as other NVM devices.

In addition to the Ceph RBD module 528 and Ceph OSD module 538, other Ceph components may be implemented that are not shown in Figure 5. These include Ceph monitors and Ceph managers.

Under Architecture 500, the end-to-end data plane forwarding and routing is offloaded to hardware (NVMe-oF hardware and P4 switch hardware), while leveraging aspects of the Ceph distributed file system that support exabyte-level scalability and data resiliency. Moreover, disks 542, which are accessed over links 503, 505, 507, and 509 using RDMA verbs and the NVMe-oF protocol, appear to VMs 512 on compute servers 502 as if they are local disks.

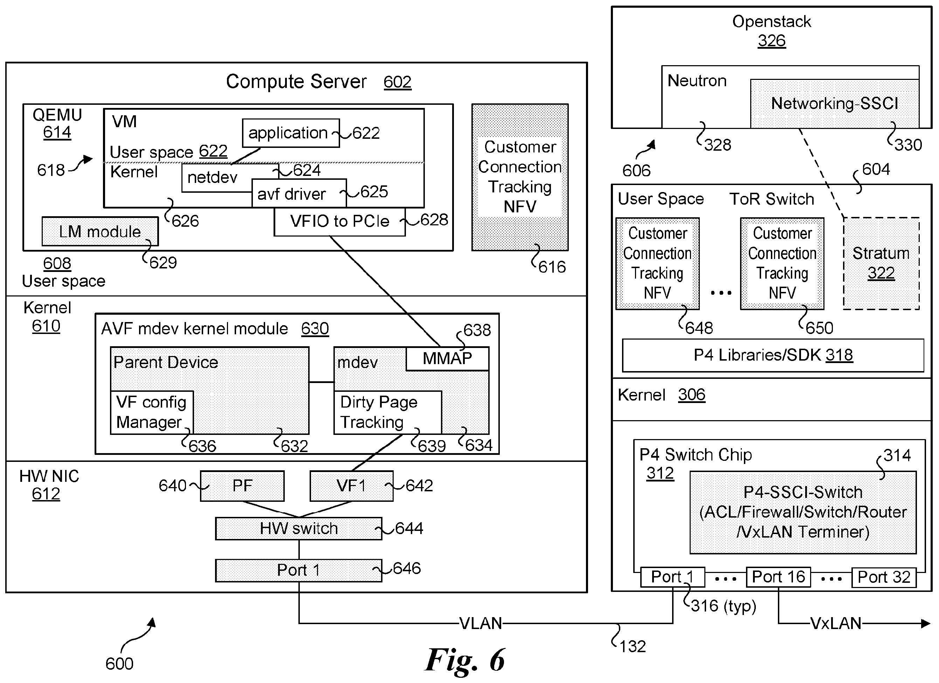

Figure 6 shows a network and NFV reference design 600, according to one embodiment. Reference design 600 is based on based on OpenStack and could be integrated into cloud solution provider's system directly, also be reference for CSP's private implementation.

Reference design 600 includes a compute server 602, a ToR switch 604, and a server 606. Compute server 602 includes a user space 608, an OS kernel 610, and a hardware NIC 612. Software components in user space 608 include QEMU 614 and a customer connection tracking NFV 616. QEMU 614 hosts a VM 618 including an application 620 running in user space 622 and a netdev component 624 and an avf driver 625 that are part of kernel 626. QEMU 614 further includes a VFIO to PCIe (virtual function input-output to Peripheral Component Interconnect Express) interface 628 and an LM module 629.

An Adaptive Virtual Function (AVF) mdev (mediated device) kernel module 630 is implemented in kernel 610. AVF mdev kernel module 630 includes a parent device 632 and an mdev instance 634. Parent device 632 includes a VF configuration manager 636, while mdev instance 634 includes an NMAP 638 and supports dirty page tracking 639.

HW NIC 612 is illustrative of a smart NIC that includes a physical function (PF) 640, a first virtual function (VF1) 642, a hardware switch 644, and a port 646. Port 646 is connected to Port 1 on ToR switch 604 via VLAN 132.

ToR switch 604 is generally configured in a similar manner to ToR switch 304 in Figure 3, as depicted by like-numbered reference numerals in Figure 3 and Figure 6. In addition, one or more instances of a customer connection tracking NFV are implemented in the user space of ToR switch 604, as depicted by customer connection tracking NFV instances 648 ... 650. Customer connection tracking NFV instances 648 ... 650 work in conjunction with customer connection tracking NFV 616 on compute server 602 to track customer connections. For example, this NFV may help users or tenants to implement some specific functions such as extra security checking based on specific customer connections.

Network and NFV reference design 600 support hardware-based forwarding operations during live migration. Under compute server 602, a "slow" path is used internally during live migration that employs dirty page tracking 639 to track memory pages that are dirtied during the live migration. However, the path between compute server 602 and the destination server to be migrated to (not shown) that will include one or more server switches employs fast-path forwarding in hardware using P4 switch chip hardware in the data plane.

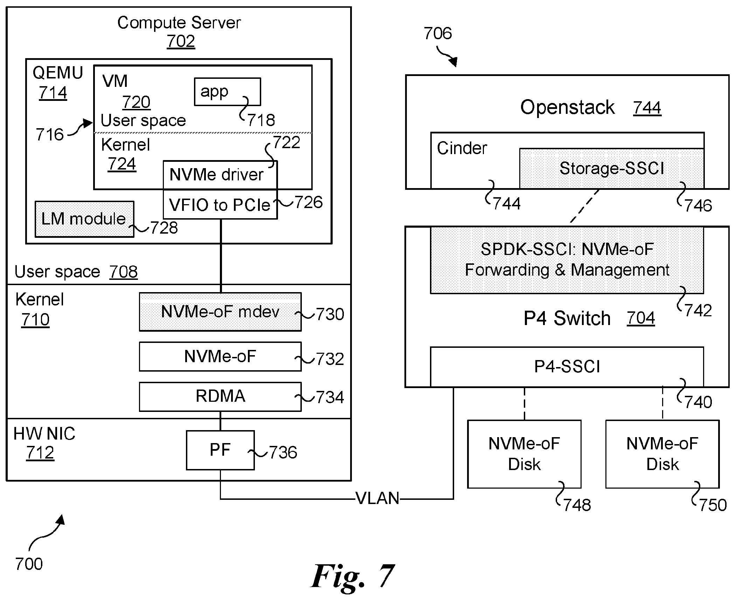

Figure 7 shows a storage reference design 700, according to one embodiment. The storage node software solution for storage reference design 700 is based on the Storage Performance Development Kit (SPDK). SPDK acts as a VM's NVMe-oF target, and maps one VM's NVMe namespace to multiple namespaces in multiple backend NVMe-oF SSD boxes.

Reference design 700 includes a compute server 702, a ToR switch 704, and a server 706. Compute server 702 includes a user space 708, an OS kernel 710, and a hardware NIC 712. Software components in user space 708 include QEMU 714, which hosts a VM 716 including an application 718 running in user space 720 and an NVMe driver 722 that are part of kernel 724. QEMU 614 further includes a VFIO to PCIe interface 726 and an LM module 728.

Kernel 710 includes an NVMe-oF mdev instance 730, an NVMe-oF block 732 and an RDMA block 734. HW NIC 712 is illustrative of a smart NIC that includes a physical function (PF) 736, a first virtual function (VF1) 642, a hardware switch 644, and a port 646. Port 646 is connected to Port 1 on ToR switch 604 via VLAN 132.

P4 switch 704 includes a P4-SSCI block 740 and an SPDK-SSCI block 742 that implements NVMe-oF forwarding and management operations. Server 706 includes openstack 744, cinder 755, and a storage-SSCI block 746. P4-SSCI 740 is also depicted as being virtually connected to NVMe-oF disks 748 and 750, which are representative of any type of block storage device.

Cinder is a Block Storage service for OpenStack. It is designed to present storage resources to end users that can be consumed by the OpenStack Compute Project (Nova). This is done through use of either a reference implementation (LVM) or plugin drivers for other storage. Cinder virtualizes the management of block storage devices and provides end users with a self-service API to request and consume those resources without requiring any knowledge of where their storage is actually deployed or on what type of device.

Another aspect of the architectures and references designs described and illustrated herein is support for multi-tenant cloud environments. Under such environments, multiple tenants that lease infrastructure from CSPs and the like are allocated resources that may be shared, such as compute and storage resources. Another shared resource is the ToR switches and/or other server switches. Under virtualized network architectures, different tenants are allocated separate virtualized resources comprising physical resources that may be shared. However, for security and performance reasons (among others), various mechanisms are implemented to ensure that a given tenants data and virtual resources are isolated and protected from other tenants in multi-tenant cloud environments.

Figure 1a shows an architecture 100a that is an augmented version of architecture 100 in Figure 1 that supports multi-tenant cloud environments. As depicted by like reference numbers in Figures 1 and 1a, the configurations of the compute servers 108 and 110 and the storage servers 112 and 114 are the same, observing that a given compute server may be assigned to a tenant or the same compute server may have virtualized physical compute resources that are allocated to more than one tenant. For example, different VMs may be allocated to different tenants.

The support for the multi-tenant cloud environment is provided in ToR switches 104a and 106a. As shown, the P4 hardware-based resources and the software-based VNFs and control plane resources are partitioned into multiple "slices," with a given slice allocated for a respective tenant. The P4 hardware-based slices are depicted as P4 hardware network slices (P4 HW NS) 142 and software-based slices are depicted as software virtual network slices (SW VNS) 144.

In a manner similar to described in the foregoing embodiments, P4 HW NS 142 are used to implement fast-path hardware-based forwarding. SW VNS 144 are used to implement control plane operations including control path and exception path operations such as connection tracking, and ACL. For the perspective of the P4 data plane runtime code, the operation of a server switch is similar whether it is being used for a single tenant or for multiple tenants. However, the ACL and other forwarding table information will be partitioned to separate the traffic flows for individual tenants. The ACL and forwarding table information is managed by the SW VNS 144 for the tenant.

As shown in an architecture 100b in Figure 1b, support for multi-tenant environments may be extended to employing P4 HW NS 142a and SW VNS 144a in an aggregation switch 103a. In one embodiment, P4 HW NS 142a is similar to P4 HW NS 142, except that P4 HW NS 142a is configured to forward VxLAN traffic in the data plane. Likewise, SW VNS 144a is configured to perform control plane operations to support forwarding of VxLAN traffic.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (*e.g*., a computer). For example, a non-transitory computer-readable or machine-readable storage medium includes any mechanism that provides (*i.e.,* stores and/or transmits) information in a form accessible by a computer or computing machine (*e.g.,* computing device, electronic system, *etc.*)*,* such as recordable/non-recordable media (*e.g*., read only memory (ROM), random access memory (RAM), magnetic disk storage media, optical storage media, flash memory devices, *etc.*)*.* The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

Various components referred to above as processes, servers, or tools described herein may be a means for performing the functions described. The operations and functions performed by various components described herein may be implemented by software running on a processing element, via embedded hardware or the like, or any combination of hardware and software. Such components may be implemented as software modules, hardware modules, special-purpose hardware (*e.g*., application specific hardware, ASICs, DSPs, *etc.*)*,* embedded controllers, hardwired circuitry, hardware logic, *etc.* Software content (*e.g.,* data, instructions, configuration information, *etc.*) may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of" can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. A method implemented in a cloud environment (100), including a first rack (101) in which plurality of compute servers (108, 110) are installed including a first compute server (108), comprising:
implementing a first server switch (104) in the first rack (106) including hardware (200) comprising a first switch chip (142. 210, 212) and one or more processors (208) coupled to memory having a user space (206) in which software components are executed, the switch chip (142. 210) programmed to implement hardware-based data plane operations;
**characterized by** communicatively coupling the first compute server (108) to the first server switch (106. 210) via a first virtual local area network ,VLAN, link (130); and
forwarding a first portion of data traffic originating from virtual machines ,VMs, (226, 228 ... 230) running in the first compute server (108) via the first VLAN link (132) and the first server switch (104) using data plane operations implemented in the switch chip (142. 210, 212).

2. The method of claim 1, wherein:
the switch chip (142. 210, 212) comprises a P4 switch chip (212) that is programmed using the P4 programming language; and/or
the method further comprises:
implementing a portion of data plane operations in via execution of data plane software in the user space (206) comprising a virtual network function ,VNF, (230); and
in connection with forwarding a second portion of data traffic originating from virtual machines (226, 228 ... 230) running in the first compute server (108) via the first server switch (104), performing packet processing operations on a least a portion of the packets in the second portion of data traffic using the VNF (230).

3. The method of claim 1, wherein:
the software components executed in the user space (206) include software components implementing control plane operations;
the cloud environment (100) further includes a second rack (102) including a storage server (112) having a plurality of storage devices (128) and a second server switch (106) to which the storage server (112) is connected via a second VLAN link (132); and/or
the method further comprises:
forwarding storage traffic originating from VMs (226, 228 ... 230) in the first storage server (112) and destined to access at least one storage device (128) in the storage server (112) via the first VLAN link (132) and the first server switch (104) using data plane operations implemented in the first switch chip (142. 210, 212).

4. The method of claim 3, wherein:
the second server switch (106) includes hardware (200) comprising a second switch chip (142. 210, 212) and one or more processors (208) coupled to memory having a user space (206) in which software components are executed, the second switch chip (142. 210, 212) programmed to implement hardware-based data plane operations; and
the method further comprises:
forwarding the storage traffic originating from the VMs (226, 228 ... 230) in the first compute server (108) via the second server switch (106) and the second VLAN link (132) using data plane operations implemented in the second switch chip (142. 210, 212).

5. The method of claim 3, wherein:
the first and second server switches (104, 106) are respectively coupled to an aggregation switch (103) via first and second virtual extended LAN ,VxLAN, links (138, 140); and
the method further comprises:
forwarding the storage traffic originating from the VMs (226, 228 ... 230) in the first compute server (106) via the first and second VxLAN links (138, 140) and the aggregation switch (103).

6. The method of claim 5, wherein:
the method further comprises:
implementing each of the first and second switch chips (104, 106) as a VxLAN terminator.

7. The method of claim 1, wherein:
the cloud environment (100) is a multi-tenant environment; and
the method further comprises:
partitioning hardware-based forwarding resources provided by the first switch chip (142. 210, 212) into a plurality of hardware slices, each hardware slice allocated to a respective tenant;
implementing control plane operations via execution of software in the user space (206) of the first server switch (142. 210, 212); and/or
partitioning software-based resources employed for implementing the control plane operations into a plurality of software slices, each software slice allocated to a respective tenant.

8. A server switch (104), comprising:
a plurality of switch ports (214, 216);
a first central processing unit ,CPU, (208);
memory coupled to the first CPU (208), having an address space logically partitioned to include a kernel space and a user space (206); and
a switch chip (142, 210, 212), operatively coupled to the first CPU (208), the memory, and the plurality of switch ports (214, 216),
wherein the switch chip (142, 210, 212) is programmed to implement hardware-based data plane operations under which packets associated with data traffic originating from virtual machines ,VMs, (226, 228 ... 230) running on one or more compute servers (106, 108) the compute servers (106, 108) being **characterized by** being coupled to switch ports (214, 216) via virtual local area network ,VLAN (130), links are forwarded via hardware-based data plane operations implemented in the switch chip (142, 210, 212).

9. The server switch (104) of claim 8, wherein:
the server switch (104) further comprises software for execution in the user space (206) to:
control plane operations that are performed in connection with forwarding the data traffic originating from the VMs (226, 228 ... 230) running on the one or more compute servers (106, 108); and/or
implement software-based data plane operations;
the software comprises one or more virtual network functions ,VNFs, (230).

10. The server switch (104) of claim 8, wherein:
the switch chip (142, 210, 212) is programmed to implement further hardware-based data plane operations under which packets associated with storage traffic originating from or destined for virtual machines ,VMs, (226, 228 ... 230) running on one or more of the compute servers (106, 108) coupled to switch ports (214, 216) via virtual local area network ,VLAN, links (130, 132) are forwarded via hardware-based data plane operations implemented in the switch chip (142, 210, 212);
the server switch (104) further comprises software comprising a Ceph RBD ,Reliable Autonomic Distributed Object Store ,RADOS, Block Device, module executed in the user space (206); and/or
the storage traffic comprises Non-Volatile Memory Express over Fabric ,NVMe-oF, traffic.

11. The server switch (104) of claim 8, wherein:
at least one switch port (214, 216) is coupled to an aggregation switch (103) via a virtual extendable local area network ,VxLAN link, , and wherein the switch chip (104) is programmed to implement a VxLAN terminator function;
the server switch further comprises:
Stratum switch operating system ,OS, for execution in the user space (206), wherein the Statum switch OS is used to communicate with the switch chip (142, 210, 212) and/or configure forwarding data to be employed by the switch chip (142, 210, 212) to effect hardware-based forwarding; and/or
the server switch (104) is deployed in a multi-tenant cloud environment and wherein hardware-based data plane operations implemented by the switch chip (142, 210, 212) are partitioned into a plurality of hardware slices, each hardware slice allocated to a respective tenant.

12. Machine-readable storage medium storing instructions that when executed by a machine results in performance of a method according to any one of claims 1 to 7.

## Patentansprüche

1. Verfahren, das in einer Cloud-Umgebung (100) implementiert wird, die ein erstes Rack (101), in dem mehrere Rechenserver (108, 110) installiert sind, die einen ersten Rechenserver (108) beinhalten, umfassend:
Implementieren eines ersten Server-Switches (104) in dem ersten Rack (106) einschließlich Hardware (200), die einen ersten Switch-Chip (142, 210, 212) und einen oder mehrere Prozessoren (208) umfasst, die mit einem Speicher gekoppelt sind, der einen Benutzerraum (206) aufweist, in dem Softwarekomponenten ausgeführt werden, wobei der Switch-Chip (142, 210) dazu programmiert ist, hardwarebasierte Datenebenenoperationen zu implementieren;
**gekennzeichnet durch** kommunikatives Koppeln des ersten Rechenservers (108) mit dem ersten Server-Switch (106, 210) über einen ersten Virtual-Local-Area-Network- bzw. VLAN-Link (130); und
Weiterleiten eines ersten Teils des Datenverkehrs, der von in dem ersten Rechenserver (108) ausgeführten virtuellen Maschinen, VMs, (226, 228 ... 230) stammt, über den ersten VLAN-Link (132) und den ersten Server-Switch (104) unter Verwendung von in dem Switch-Chip (142, 210, 212) implementierten Datenebenenoperationen.

2. Verfahren nach Anspruch 1, wobei:
der Switch-Chip (142, 210, 212) einen P4-Switch-Chip (212) umfasst, der unter Verwendung der P4-Programmiersprache programmiert ist; und/oder
das Verfahren ferner Folgendes umfasst:
Implementieren eines Teils von Datenebenenoperationen über Ausführung von Datenebenensoftware in dem Benutzerraum (206), umfassend eine virtuelle Netzwerkfunktion, VNF, (230); und
in Verbindung mit dem Weiterleiten eines zweiten Teils des Datenverkehrs, der von in dem ersten Rechenserver (108) ausgeführten virtuellen Maschinen (226, 228 ... 230) stammt, über den ersten Server-Switch (104), Durchführen von Paketverarbeitungsoperationen an mindestens einem Teil der Pakete in dem zweiten Teil des Datenverkehrs unter Verwendung der VNF (230).

3. Verfahren nach Anspruch 1, wobei:
die Softwarekomponenten, die in dem Benutzerraum (206) ausgeführt werden, Softwarekomponenten beinhalten, die Steuerebenenoperationen implementieren;
die Cloud-Umgebung (100) ferner ein zweites Rack (102) beinhaltet, das einen Speicherungsserver (112) mit mehreren Speicherungsvorrichtungen (128) und einen zweiten Server-Switch (106) beinhaltet, mit dem der Speicherungsserver (112) über einen zweiten VLAN-Link (132) verbunden ist; und/oder
das Verfahren ferner Folgendes umfasst:
Weiterleiten von Speicherverkehr, der von VMs (226, 228 ... 230) in dem ersten Speicherungsserver (112) stammt und dazu bestimmt ist, auf mindestens eine Speicherungsvorrichtung (128) in dem Speicherungsserver (112) zuzugreifen, über den ersten VLAN-Link (132) und den ersten Server-Switch (104) unter Verwendung von in dem ersten Switch-Chip (142, 210, 212) implementierten Datenebenenoperationen.

4. Verfahren nach Anspruch 3, wobei:
der zweite Server-Switch (106) Hardware (200) beinhaltet, die einen zweiten Switch-Chip (142, 210, 212) und einen oder mehrere Prozessoren (208) umfasst, die mit einem Speicher gekoppelt sind, der einen Benutzerraum (206) aufweist, in dem Softwarekomponenten ausgeführt werden, wobei der zweite Switch-Chip (142, 210, 212) dazu programmiert ist, hardwarebasierte Datenebenenoperationen zu implementieren; und
das Verfahren ferner Folgendes umfasst:
Weiterleiten des Speicherverkehrs, der von den VMs (226,
228 ... 230) in dem ersten Rechenserver (108) stammt, über den zweiten Server-Switch (106) und den zweiten VLAN-Link (132) unter Verwendung von in dem zweiten Switch-Chip (142, 210, 212) implementierten Datenebenenoperationen.

5. Verfahren nach Anspruch 3, wobei:
der erste und der zweite Server-Switch (104, 106) jeweils über einen ersten und einen zweiten virtuellen Extended-LAN- bzw. VXLAN-Link (138, 140) mit einem Aggregations-Switch (103) gekoppelt sind; und
das Verfahren ferner Folgendes umfasst:
Weiterleiten des Speicherverkehrs, der von den VMs (226, 228 ... 230) in dem ersten Rechenserver (106) stammt, über den ersten und den zweiten VxLAN-Link (138, 140) und den Aggregations-Switch (103).

6. Verfahren nach Anspruch 5, wobei:
das Verfahren ferner Folgendes umfasst:
Implementieren sowohl des ersten als auch des zweiten Switch-Chips (104, 106) als VxLAN-Abschluss.

7. Verfahren nach Anspruch 1, wobei:
die Cloud-Umgebung (100) eine mandantenfähige Umgebung ist; und
das Verfahren ferner Folgendes umfasst:
Partitionieren hardwarebasierter Weiterleitungsressourcen, die durch den ersten Switch-Chip (142, 210, 212) bereitgestellt werden, in mehrere Hardware-Slices, wobei jedes Hardware-Slice einem jeweiligen Mandanten zugewiesen wird;
Implementieren von Steuerebenenoperationen über die Ausführung von Software in dem Benutzerraum (206) des ersten Server-Switches (142, 210, 212); und/oder Partitionieren softwarebasierter Ressourcen, die zum Implementieren der Steuerebenenoperationen verwendet werden, in mehrere Software-Slices, wobei jedes Software-Slice einem jeweiligen Mandanten zugewiesen wird.

8. Server-Switch (104), der Folgendes umfasst:
mehrere Switch-Ports (214, 216);
eine erste Zentralverarbeitungseinheit, CPU, (208);
einen Speicher, der mit der ersten CPU (208) gekoppelt ist und einen Adressraum aufweist, der logisch partitioniert ist, um einen Kernelraum und einen Benutzerraum (206) zu beinhalten; und
einen Switch-Chip (142, 210, 212), der mit der ersten CPU (208), dem Speicher und den mehreren Switch-Ports (214, 216) wirkgekoppelt ist,
wobei der Switch-Chip (142, 210, 212) dazu programmiert ist, hardwarebasierte Datenebenenoperationen zu implementieren, unter denen Pakete, die mit Datenverkehr assoziiert sind, der von virtuellen Maschinen, VMs (226, 228 ... 230) stammt, die auf einem oder mehreren Rechenservern (106, 108) ausgeführt werden, wobei die Rechenserver (106, 108) **dadurch gekennzeichnet sind, dass** sie über Virtual-Local-Area-Network- bzw. VLAN(130)-Links mit Switch-Ports (214, 216) gekoppelt sind, über in dem Switch-Chip (142, 210, 212) implementierte hardwarebasierte Datenebenenoperationen weitergeleitet werden.

9. Server-Switch (104) nach Anspruch 8, wobei:
der Server-Switch (104) ferner Software zur Ausführung in dem Benutzerraum (206) umfasst zum:
Steuern von Ebenenoperationen, die in Verbindung mit dem Weiterleiten des Datenverkehrs durchgeführt werden, der von den VMs stammt (226, 228 ... 230), die auf dem einen oder den mehreren Rechenservern (106, 108) ausgeführt werden; und/oder
Implementieren softwarebasierter Datenebenenoperationen;
die Software eine oder mehrere virtuelle Netzwerkfunktionen, VNFs, (230) umfasst.

10. Server-Switch (104) nach Anspruch 8, wobei:
der Switch-Chip (142, 210, 212) dazu programmiert ist, weitere hardwarebasierte Datenebenenoperationen zu implementieren, unter denen Pakete, die mit Speicherverkehr assoziiert sind, der von virtuellen Maschinen, VMs (226, 228 ... 230) stammt, die auf einem oder mehreren der Rechenserver (106, 108) ausgeführt werden, die über Virtual-Local-Area-Network- bzw. VLAN-Links (130, 132) mit Switch-Ports (214, 216) gekoppelt sind, über in dem Switch-Chip (142, 210, 212) implementierte hardwarebasierte Datenebenenoperationen weitergeleitet werden;
der Server-Switch (104) ferner Software umfasst, die ein in dem Benutzerraum (206) ausgeführtes Ceph-RBD- bzw. Ceph-Reliable-Autonomic-Distributed-Object-Store- bzw. Ceph-RADOS-Block-Device-Modul umfasst; und/oder
der Speicherverkehr Non-Volatile-Memory-Express-over-Fabric- bzw. NVMe-oF-Verkehr umfasst.

11. Server-Switch (104) nach Anspruch 8, wobei:
mindestens ein Switch-Port (214, 216) über einen Virtual-Extendable-Local-Area-Network- bzw. VxLAN-Link mit einem Aggregations-Switch (103) gekoppelt ist und wobei der Switch-Chip (104) dazu programmiert ist, eine VXLAN-Abschlussfunktion zu implementieren;
der Server-Switch ferner Folgendes umfasst:
Stratum-Switch-Betriebssystem bzw. Stratum-Switch-OS zur Ausführung in dem Benutzerraum (206), wobei das Statum-Switch-OS verwendet wird, um mit dem Switch-Chip (142, 210, 212) zu kommunizieren und/oder Weiterleitungsdaten zu konfigurieren, die durch den Switch-Chip (142, 210, 212) verwendet werden sollen, um hardwarebasiertes Weiterleiten zu bewirken; und/oder
der Server-Switch (104) in einer Mehrmandanten-Cloud-Umgebung eingesetzt wird und wobei durch den Switch-Chip (142, 210, 212) implementierte hardwarebasierte Datenebenenoperationen in mehrere Hardware-Slices partitioniert werden, wobei jedes Hardware-Slice einem jeweiligen Mandanten zugewiesen wird.

12. Maschinenlesbares Speicherungsmedium, das Anweisungen speichert, die bei Ausführung durch eine Maschine zur Durchführung eines Verfahrens nach einem der Ansprüche 1 bis 7 führen.

## Revendications

1. Procédé mis en œuvre dans un environnement de nuage (100), comportant un premier rack (101) dans lequel sont installés une pluralité de serveurs de calcul (108, 110), y compris un premier serveur de calcul (108), comprenant :
la mise en œuvre d'un premier commutateur de serveur (104) dans le premier rack (106) comportant des matériels (200) comprenant une première puce de commutation (142. 210, 212) et un ou plusieurs processeurs (208) couplés à une mémoire ayant un espace utilisateur (206) dans lequel des composants logiciels sont exécutés, la puce de commutation (142. 210) étant programmée pour mettre en œuvre des opérations matérielles du plan de données ; **caractérisé par** le couplage par voie de communication du premier serveur de calcul (108) au premier commutateur de serveur (106. 210) via une première liaison par réseau local virtuel, VLAN, (130) ; et
l'acheminement d'une première partie du trafic de données provenant de machines virtuelles, VM, (226, 228 ... 230) s'exécutant dans le premier serveur de calcul (108) via la première liaison VLAN (132) et le premier commutateur de serveur (104) au moyen d'opérations du plan de données mises en œuvre dans la puce de commutation (142. 210, 212).

2. Procédé selon la revendication 1, dans lequel :
la puce de commutation (142. 210, 212) comprend une puce de commutation P4 (212) qui est programmée au moyen du langage de programmation P4 ; et/ou
le procédé comprend en outre :
la mise en œuvre d'une partie d'opérations du plan de données par exécution de logiciels du plan de données dans l'espace utilisateur (206) comprenant une fonction de réseau virtuel, VNF, (230) ; et
en liaison avec l'acheminement d'une seconde partie du trafic de données provenant de machines virtuelles (226, 228 ... 230) s'exécutant dans le premier serveur de calcul (108) via le premier commutateur de serveur (104), la réalisation d'opérations de traitement de paquets sur au moins une partie des paquets dans la seconde partie du trafic de données à l'aide de la VNF (230).

3. Procédé selon la revendication 1, dans lequel :
les composants logiciels exécutés dans l'espace utilisateur (206) comprennent des composants logiciels mettant en œuvre des opérations du plan de commande ;
l'environnement de nuage (100) comprend en outre un second rack (102) comprenant un serveur de stockage (112) ayant une pluralité de dispositifs de stockage (128) et un second commutateur de serveur (106) auquel le serveur de stockage (112) est connecté via une seconde liaison VLAN (132) ; et/ou
le procédé comprend en outre :
l'acheminement du trafic de stockage provenant de VM (226, 228 ... 230) dans le premier serveur de stockage (112) et destiné à accéder à au moins un dispositif de stockage (128) dans le serveur de stockage (112) via la première liaison VLAN (132) et le premier commutateur de serveur (104) au moyen d'opérations du plan de données mises en œuvre dans la première puce de commutation (142. 210, 212).

4. Procédé selon la revendication 3, dans lequel :
le second commutateur de serveur (106) comporte un matériel (200) comprenant une seconde puce de commutation (142. 210, 212) et un ou plusieurs processeurs (208) couplés à une mémoire ayant un espace utilisateur (206) dans lequel des composants logiciels sont exécutés, la seconde puce de commutation (142. 210, 212) étant programmée pour mettre en œuvre des opérations matérielles du plan de données ; et
le procédé comprend en outre :
l'acheminement du trafic de stockage provenant des VM (226, 228 ... 230) dans le premier serveur de calcul (108) via le second commutateur de serveur (106) et la seconde liaison VLAN (132) au moyen d'opérations du plan de données mises en œuvre dans la seconde puce de commutation (142. 210, 212).

5. Procédé selon la revendication 3, dans lequel :
les premier et second commutateurs de serveur (104, 106) sont respectivement couplés à un commutateur d'agrégation (103) via des première et seconde liaisons LAN étendues virtuelles, VxLAN (138, 140) ; et
le procédé comprend en outre :
l'acheminement du trafic de stockage provenant des VM (226, 228 ... 230) dans le premier serveur de calcul (106) via les première et seconde liaisons VxLAN (138, 140) et le commutateur d'agrégation (103).

6. Procédé selon la revendication 5, dans lequel :
le procédé comprend en outre :
la mise en œuvre de chacune des première et seconde puces de commutation (104, 106) en tant que terminaison de VxLAN.

7. Procédé selon la revendication 1, dans lequel :
l'environnement de nuage (100) est un environnement multi-locataires ; et
le procédé comprend en outre :
le partitionnement de ressources matérielles d'acheminement fournies par la première puce de commutation (142. 210, 212) en une pluralité de tranches matérielles, chaque tranche matérielle étant allouée à un locataire respectif ;
la mise en œuvre d'opérations du plan de commande par exécution de logiciels dans l'espace utilisateur (206) du premier commutateur de serveur (142. 210, 212) ; et/ou le partitionnement de ressources logicielles utilisées pour mettre en œuvre les opérations du plan de commande en une pluralité de tranches logicielles, chaque tranche logicielle étant allouée à un locataire respectif.

8. Commutateur de serveur (104), comprenant :
une pluralité de ports de commutation (214, 216),
une première unité centrale de traitement, CPU, (208) ;
une mémoire couplée à la première CPU (208), ayant un espace d'adressage partitionné logiquement pour comprendre un espace noyau et un espace utilisateur (206) ; et
une puce de commutation (142, 210, 212), fonctionnellement couplée à la première CPU (208), à la mémoire, et à la pluralité de ports de commutation (214, 216),
dans lequel la puce de commutation (142, 210, 212) est programmée pour mettre en œuvre des opérations matérielles du plan de données conformément auxquelles des paquets associés à un trafic de données provenant de machines virtuelles, VM, (226, 228 ... 230) s'exécutant sur un ou plusieurs serveurs de calcul (106, 108), les serveurs de calcul (106, 108) étant **caractérisés en ce qu'**ils sont couplés à des ports de commutation (214, 216) via des liaisons par réseau local virtuel, VLAN (130), sont acheminés via des opérations matérielles du plan de données mises en œuvre dans la puce de commutation (142, 210, 212).

9. Commutateur de serveur (104) selon la revendication 8, dans lequel :
le commutateur de serveur (104) comprend en outre des logiciels destinés à être exécutés dans l'espace utilisateur (206) pour :
mettre en œuvre des opérations du plan de commande qui sont réalisées en liaison avec l'acheminement du trafic de données en provenance des VM (226, 228 ... 230) s'exécutant sur le ou les serveurs de calcul (106, 108) ; et/ou
mettre en œuvre des opérations logicielles du plan de données ;
le logiciel comprenant une ou plusieurs fonctions de réseau virtuel, VNF, (230).

10. Commutateur de serveur (104) selon la revendication 8, dans lequel :
la puce de commutation (142, 210, 212) est programmée pour mettre en œuvre d'autres opérations matérielles du plan de données conformément auxquelles des paquets associés à un trafic de stockage provenant de, ou destinés à des machines virtuelles, VM, (226, 228, ... 230) s'exécutant sur un ou plusieurs des serveurs de calcul (106, 108) couplés à des ports de commutation (214, 216) via des liaisons par réseau local virtuel, VLAN, (130, 132), sont acheminés via des opérations matérielles du plan de données mises en œuvre dans la puce de commutation (142, 210, 212) ;
le commutateur de serveur (104) comprend en outre un logiciel comprenant un module Ceph RBD, (Reliable autonomic Distributed Object Store, RADOS, Block Device), exécuté dans l'espace utilisateur (206) ; et/ou le trafic de stockage comprend un trafic de mémoire NVMe-oF (Non-Volatile Memory Express over Fabric).

11. Commutateur de serveur (104) selon la revendication 8, dans lequel :
au moins un port de commutation (214, 216) est couplé à un commutateur d'agrégation (103) via une liaison par réseau local virtuel extensible, VxLAN, et dans lequel la puce de commutation (104) est programmée pour mettre en œuvre une fonction de terminaison de VxLAN ;
le commutateur de serveur comprend en outre :
un système d'exploitation, OS, de commutateur de strate, destiné à être exécuté dans l'espace utilisateur (206), dans lequel l'OS de commutateur de strate est utilisé pour communiquer avec la puce de commutation (142, 210, 212) et/ou configurer des données d'acheminement devant être utilisées par la puce de commutation (142, 210, 212) pour effectuer un acheminement matériel ; et/ou
le commutateur de serveur (104) est déployé dans un environnement de nuage multi-locataires et dans lequel les opérations matérielles du plan de données mises en œuvre par la puce de commutation (142, 210, 212) sont partitionnées en une pluralité de tranches matérielles, chaque tranche matérielle étant allouée à un locataire respectif.

12. Support de stockage lisible par machine stockant des instructions qui, lorsqu'elles sont exécutées par une machine, conduisent à la mise en œuvre d'un procédé selon l'une quelconque des revendications 1 à 7.
